# FASCICULE DE BREVET EUROPEEN

(11) **EP 1 932 747 B1**
(45) Date de publication et mention de la délivrance du brevet: **24.02.2010**
(21) Numéro de dépôt: 07122500.7
(22) Date de dépôt: 06.12.2007
(51) Int. Cl.: B62D 13/04

(54) **Procédé et dispositif de commande des roues directrices d'une remorque**
Verfahren und Vorrichtung zur Lenkung der Leiträder eines Anhängers
Method and device for controlling the steering wheels of a trailer

(30) Priorité: 07.12.2006 FR 0610682
(43) Date de publication de la demande: 18.06.2008
(73) Titulaire: Monroc, 85670 Saint Etienne du Bois (FR)
(72) Inventeur: Croix, Olivier, 44140, MONTBERT (FR)
(74) Mandataire: Branger, Jean-Yves

(56) Documents cités:
- EP-A1- 0 282 426
- JP-A- 1 223 084
- JP-A- 62 289 472
- JP-A- 2001 301 636

## Description

La présente invention est relative à un procédé de commande des roues directrices d'une remorque reliée par une articulation à un véhicule tracteur. Elle se rapporte également à un dispositif pour la mise en oeuvre de ce procédé.

Les constructeurs de remorques, et tout particulièrement de remorques agricoles, équipent un certain nombre de ces véhicules d'un système de pilotage d'essieux.

Ce système tient compte de l'angle de braquage du tracteur par rapport à la remorque et, par au moins un vérin hydraulique reliant ce tracteur à la remorque, agit sur l'orientation des roues directrices associées à un, voire à deux essieux directeurs de la remorque.

Il s'agit d'un système exclusivement hydraulique qui, selon le principe des "vases communicants", pilote d'orientation des roues de la remorque. On améliore ainsi nettement la manoeuvrabilité de la remorque, tout en réduisant l'usure des pneus qui l'équipent.

Cependant, ce système nécessite un réglage précis, il est sujet à des fuites hydrauliques et sa mise en oeuvre est onéreuse.

On décrit dans le document EP-A-0 282 426, un dispositif de commande des roues directrices d'une remorque, selon le préambule de la revendication 3.

Au sein de ce dispositif, la présence de capteurs et d'une unité de commande électronique permet de solutionner les problèmes énumérés ci-dessus, liés à l'utilisation du "tout hydraulique".

Toutefois, les moyens spécifiques de ce dispositif sont dédiés à un couple véhicule tracteur/remorque prédéterminé. En particulier, ce dispositif nécessite un montage particulier, selon une géométrie particulière, à l'arrière du tracteur.

Or, il est de plus en plus répandu que des agriculteurs se regroupent en coopératives d'utilisation de matériel agricole (CUMA), ce qui signifie par exemple qu'un agriculteur va venir, au volant de son véhicule, emprunter une remorque disponible auprès de la CUMA pour une durée donnée.

La présente invention vise donc notamment à perfectionner le dispositif du document précité, pour qu'il puisse être pleinement fonctionnel, même dans la situation qui vient d'être décrite, c'est à dire celle dans laquelle une même remorque est susceptible d'être attelée à des véhicules tracteurs différents.

Ainsi, la présente invention se rapporte en premier lieu à un procédé de commande des roues directrices d'une remorque reliée par une articulation à un véhicule tracteur comportant :
- au moins un moyen de raccordement hydraulique de la remorque à un circuit hydraulique sous pression du véhicule tracteur,
- un mécanisme de direction agissant sur les roues directrices de la remorque par au moins un vérin hydraulique, via une unité de commande hydraulique reliée au moyen de raccordement ;
- une unité électronique pour commander ladite unité de commande hydraulique en fonction de signaux fournis par des capteurs ;
- au moins un capteur d'angle fournissant à ladite unité électronique une valeur de signal représentative de l'angle formé par les axes longitudinaux respectifs du véhicule tracteur et de la remorque ;
- un capteur de contrôle délivrant à l'unité électronique une valeur de signal représentative de la position des roues directrices de la remorque.

Ce procédé est particulièrement remarquable par le fait qu'il consiste à mettre en oeuvre les étapes suivantes :
a) dans un premier mode dit - mode d'apprentissage - dans lequel l'alimentation hydraulique de la remorque est coupée :
   - mesurer et enregistrer les signaux fournis par les dits capteurs, d'une part lorsque les véhicule et remorque sont alignés et, d'autre part, lorsque le véhicule est en position de braquage maximal par rapport à la remorque ;
   - à partir de ces signaux, établir pour chaque capteur, la relation valeur du signal = f (angle) ;
b) puis dans un deuxième mode dit - mode de régulation - dans lequel l'alimentation hydraulique de la remorque est rétablie :
   - comparer régulièrement les valeurs des signaux fournis par lesdits capteurs et, dans l'éventualité où elles sont différentes, assigner au capteur de contrôle la même valeur que celle du capteur d'angle pour corriger cet angle en tenant compte de ladite relation et commander l'unité de commande hydraulique en vue de modifier l'orientation des roues directrices de la remorque.

Grâce au procédé selon l'invention, à chaque fois qu'un véhicule tracteur différent sera associé à la remorque, il suffira que l'utilisateur mette en oeuvre les étapes qui viennent d'être décrites pour que le couple véhicule/remorque soit pleinement fonctionnel. La remorque n'est donc plus dédiée à un véhicule, et inversement.

Un autre aspect de l'invention est relatif à un dispositif de commande de roues directrices d'une remorque reliée par une articulation à un véhicule tracteur, pour la mise en oeuvre du procédé décrit ci-dessus, ce dispositif comportant :
- au moins un moyen de raccordement hydraulique de la remorque à un circuit hydraulique sous pression du véhicule tracteur,
- un mécanisme de direction agissant sur les roues directrices de la remorque par au moins un vérin hydraulique, via une unité de commande hydraulique reliée au moyen de raccordement ;
- une unité électronique pour commander ladite unité de commande hydraulique en fonction de signaux fournis par des capteurs ;
- au moins un capteur d'angle fournissant à ladite unité électronique une valeur de signal représentative de l'angle formé par les axes longitudinaux respectifs du véhicule tracteur et de la remorque ;
- un capteur de contrôle délivrant à l'unité électronique une valeur de signal représentative de la position des roues directrices de la remorque

Selon l'invention, ladite unité électronique intègre des moyens :
a) dans un premier mode dit - mode d'apprentissage - dans lequel l'alimentation hydraulique de la remorque est coupée :
   - de mesure et enregistrement des signaux fournis par les dits capteurs d'une part lorsque les véhicule et remorque sont alignés et, d'autre part, lorsque le véhicule est en position de braquage maximal par rapport à la remorque ;
   - d'établissement, à partir de ces signaux et pour chaque capteur, la relation valeur du signal = f (angle) ;
b) dans un deuxième mode dit - mode de régulation - dans lequel l'alimentation hydraulique de la remorque est rétablie :
   - de comparaison régulière des valeurs des signaux fournis par lesdits capteurs et, dans l'éventualité où elles sont différentes, assigner au capteur de contrôle la même valeur que celle du capteur d'angle pour corriger cet angle en tenant compte de ladite relation et commander l'unité de commande hydraulique en vue de modifier l'orientation des roues directrices de la remorque.

Selon d'autres caractéristiques avantageuses et non limitatives de l'invention :
- lesdits capteurs sont des potentiomètres à effet Hall;
- ledit capteur d'angle est fixé sur un timon solidaire de la remorque, d'articulation sur le véhicule tracteur et est relié, par une liaison articulée à parallélogramme déformable, audit véhicule ;
- ledit capteur de contrôle est monté dans le pivot de l'essieu des roues directrices de la remorque ;
- il comprend un boîtier porté par ledit véhicule tracteur, à disposition de son conducteur, et relié à ladite unité électronique, ce boîtier comportant des moyens de commutation du mode d'apprentissage au mode de régulation et inversement, ainsi que des moyens de validation des mesures des signaux lus dans ledit état d'apprentissage ;
- ladite unité de commande hydraulique comporte des distributeurs hydrauliques proportionnels ;
- ladite unité électronique intègre des moyens aptes, en cas de détection d'une erreur, à commander l'orientation des roues directrices bloquées en position droite, c'est-à-dire parallèles à l'axe longitudinal de la remorque.

D'autres caractéristiques et avantages de la présente invention apparaîtront à la lecture de la description détaillée qui va suivre. Elle sera faite en référence aux dessins annexés dans lesquels :
- la figure 1 est un schéma montrant un tracteur auquel est attelée un remorque à essieux directeurs, équipé du dispositif selon l'invention ;
- les figures 2 et 3 sont des vues représentant schématiquement l'implantation du capteur d'angle du dispositif et illustrant la manière dont il fonctionne ;
- la figure 4 est une vue de dessus d'un essieu directeur de la remorque et du dispositif de commande qui lui est associé;
- les figures 5 et 6 sont des courbes représentatives des valeurs de signal enregistrées par les capteurs du dispositif, en fonction de l'angle de braquage ;

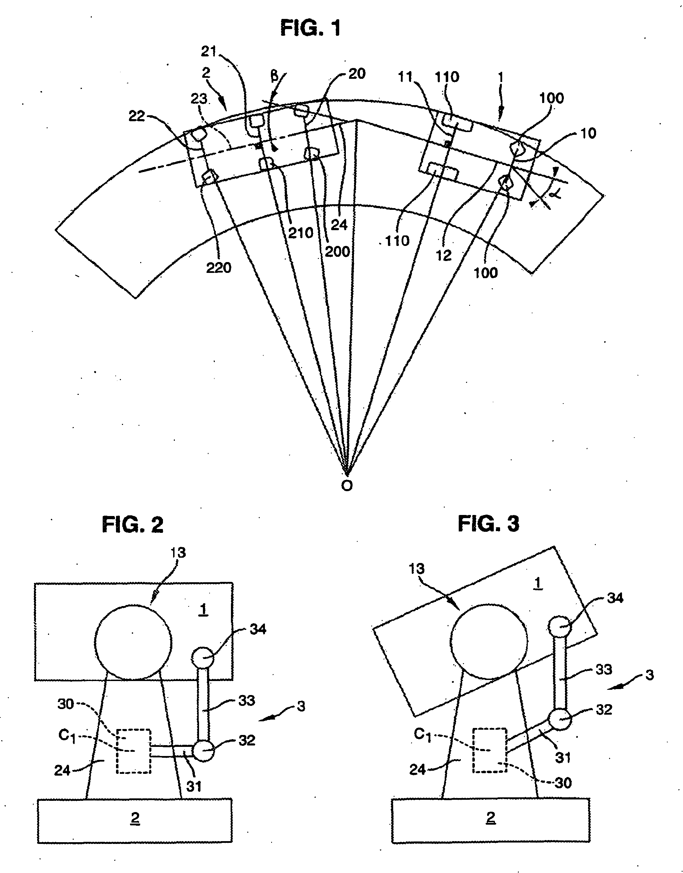

A la figure 1 est représenté un tracteur 1 amené à se déplacer dans le sens de la flèche **f**. Ce tracteur possède un essieu avant directeur 10, associé à deux roues 100, ainsi qu'un essieu arrière non directeur 11, pourvu de roues 110.

Lorsque les roues avant 100 sont braquées par rapport à l'axe longitudinal 12 du tracteur, ces roues forment avec ledit axe longitudinal un angle α.

A l'arrière de ce tracteur est placée une remorque agricole 2 qui, dans l'exemple illustré ici, possède trois essieux 20, 21 et 22.

Les essieux avant 20 et arrière 22 sont directeurs et pourvus de roues 200 et 220. L'essieu central 21 est prévu, quant à lui, non directeur. Ses roues sont donc toujours orientées parallèlement à l'axe longitudinal de la remorque.

Bien entendu, dans d'autres formes de réalisation non représentées, la remorque pourrait être pourvue d'un nombre différent d'essieux, les essieux directeurs pouvant occuper n'importe quelle place dans l'ensemble roulant (avant, arrière, milieu). Ainsi, dans la suite de la description et à des fins de simplification et de clarté, on considèrera que la remorque possède deux essieux, celui placé à l'avant étant directeur (bien que, dans la pratique, c'est l'essieu arrière qui est le plus souvent directeur).

Cette remorque est pourvue d'un châssis rigide, c'est-à-dire non articulé, qui comprend à l'avant un timon fixe 24 qui s'étend selon l'axe 23. Ce timon est conçu de manière à être accroché, par une articulation adéquate de type bien connu, sur un dispositif d'attelage classique, fixé à l'arrière du tracteur 1, selon l'axe 12.

Conformément à l'invention, on cherche à ce que l'angle formé par les roues des essieux directeurs/de l'essieu directeur de la remorque forment/forme avec l'axe longitudinal 23 de cette remorque, un angle **β** tel que les roues soient parallèles à la tangente du cercle de centre **O,** passant par le point de contact roue/sol.

Bien entendu, le tracteur possède, de manière bien connue, au moins un circuit hydraulique sous pression auquel peuvent être connectés les éléments sous pression qui équipent la remorque, via un moyen de raccordement.

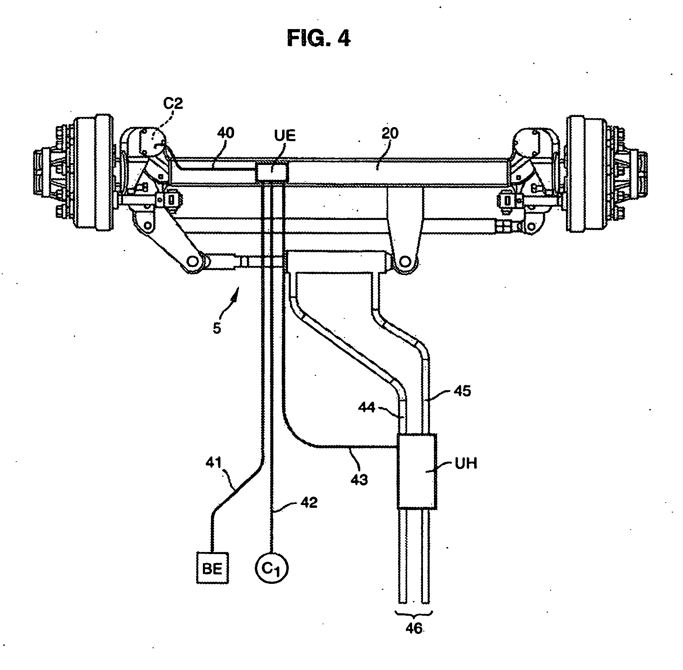

Ainsi, la remorque 2 possède un mécanisme de direction agissant sur les roues directrices par au moins un vérin hydraulique, via une unité de commande hydraulique reliée au moyen de raccordement qui a été évoqué ci-dessus. Cet aspect sera décrit plus loin, en référence à la figure 4.

Selon l'invention, le dispositif de commande comprend au moins un capteur d'angle qui fournit à une unité électronique une valeur de signal représentative de l'angle formé par les axes longitudinaux respectifs du véhicule tracteur et de la remorque.

En se reportant aux figures 2 et 3, on a représenté un exemple de montage de ce capteur d'angle.

Volontairement et dans un but de simplification, on a représenté sous la forme de rectangles le tracteur 1 et sa remorque 2. De plus, on a figuré par un cercle de grande taille 13, l'articulation du timon 24 de la remorque sur l'arrière du tracteur 1.

Sous ce timon est fixé un boîtier étanche 30, qui contient un capteur d'angle **C₁.** Ce capteur est de préférence un potentiomètre à effet Hall.

L'arbre de sortie vertical du capteur **C₁** est associé à une tringlerie qui porte la référence générale 3. Cette tringlerie comprend une première tige 31 qui est fixée audit arbre et liée, par une articulation 32 d'axe vertical, sur une deuxième tige 33. Cette tige est par ailleurs articulée sur un pivot 34 monté à l'arrière du tracteur, non loin de l'articulation 13.

Quand le tracteur et sa remorque sont parfaitement alignés, on se trouve dans la situation de la figure 2 dans laquelle la tringlerie 3, le capteur **C₁** et l'articulation 13 constituent en quelque sorte un parallélogramme.

Dès lors que le conducteur du tracteur braque les roues, la tringlerie 3 se déforme dans la position illustrée, et fait subir au capteur **C₁** une rotation autour de son axe, de sorte que le capteur **C₁** enregistre alors une différence de signal, qui est directement caractéristique de l'angle d'orientation des roues avant du tracteur.

L'angle détecté par le capteur ne doit pas être forcément strictement égal à l'angle de braquage des roues du tracteur. Dans ces conditions, le pivot 34 précité peut être mis en place à l'arrière du tracteur, en un emplacement proche de l'articulation 13.

Le schéma du dispositif de commande des roues directrices de la remorque 2 est illustré à la figure **4**, à savoir celles associées à l'essieu 20.

Le capteur **C**₁, qui délivre un signal représentatif de l'angle d'orientation des roues du tracteur, est relié, via une ligne 42, à une unité électronique **UE** installée sur l'essieu directeur 20.

Par une ligne 43, l'unité électronique **UE** est reliée et est apte à commander une unité de commande hydraulique **UH** qui, elle-même, est reliée au circuit hydraulique du tracteur par des conduites 46.

Cette unité **UH,** commande, par l'entremise de conduites hydrauliques 44 et 45, un vérin de direction 5 qui oriente les roues directrices de l'essieu 20 grâce à une timonerie de direction classique.

Comme indiqué plus haut, le dispositif de l'invention comprend également un capteur de contrôle qui délivre à l'unité électronique **UE** une valeur de signal représentative de la position des roues directrices de la remorque 2. Ce capteur, référencé **C₂**, est logé à l'intérieur du pivot d'une des roues qui équipe l'essieu. Ce capteur, qui est également préférentiellement un potentiomètre à effet Hall, est relié à l'unité électronique **UE** par une ligne 40.

Enfin, cette unité électronique est reliée par une ligne 41 à un boîtier embarqué **BE.** Ce boîtier est prévu pour être déplacé à proximité du conducteur du tracteur, notamment dans sa cabine.

L'unité électronique **UE** contient un circuit imprimé associé à un microcontrôleur pour le pilotage de l'essieu 20, en fonction des informations transmises par les deux capteurs.

Quant au boîtier **BE,** il est avantageusement pourvu d'un commutateur à trois positions, l'une pour un mode d'apprentissage, la deuxième pour un mode de régulation et la troisième pour un mode "ligne droite".

Conformément à l'invention, l'unité électronique **UE** intègre donc des moyens qui vont permettre au système, dans un premier temps, de fonctionner par apprentissage.

Cela signifie que l'utilisateur du tracteur va pouvoir mémoriser les points extrêmes de déplacement du tracteur 1 et de sa remorque 2.

Pour cela, le capteur **C₁**, associé à la tringlerie 3 installée sur le timon 24, ainsi que le potentiomètre **C₂** installé dans l'essieu 20 permettent la mesure des deux angles, à savoir celui formé par les axes longitudinaux respectifs du tracteur et de la remorque et β, qui sont traduits tous les deux sous forme de signaux électriques.

Dans une première étape, l'utilisateur met en route le dispositif, puis se sert du boîtier embarqué **BE** pour le commuter dans une position d'apprentissage. L'alimentation hydraulique du vérin 5 est alors libre. Les roues de l'essieu 20 peuvent alors évoluer et s'orienter librement.

La deuxième étape consiste alors à placer le tracteur 1 et sa remorque 2 en ligne droite.

Lorsque ce convoi est bien positionné, l'utilisateur appuie sur un bouton poussoir dont est équipé le boîtier **BE.** Cela occasionne la prise de mesure par l'unité électronique **UE** des deux signaux relevés pour chacun des deux potentiomètres **C₁** et **C₂**. Elle assigne à ces signaux la valeur zéro. De préférence, un voyant prévu sur le boîtier **BE** se met alors à clignoter pour signaler que les deux mesures ont bien été enregistrées.

Dans une troisième étape, l'utilisateur positionne la remorque en position maximale de braquage de l'essieu 10 du tracteur. Pour signaler à l'utilisateur que cet angle de braquage est maximal, le voyant du boîtier peut s'allumer pendant quelques secondes.

Dès lors, un nouvel appui sur le bouton poussoir mémorisera les deux valeurs maximales mesurées par les deux capteurs.

La phase d'apprentissage est alors terminée.

A l'aide des quatre mesures relevées, l'unité électronique **UE** va établir la relation valeur du signal mesuré = f (angle), ceci pour chacun des capteurs.

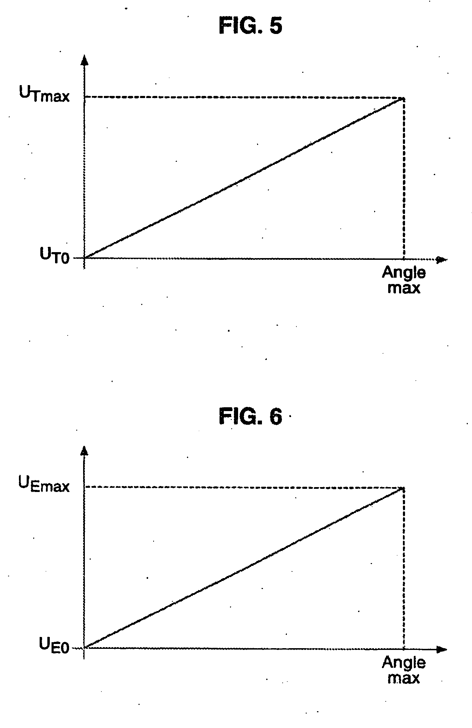

Ceci se traduit par les courbes des figures 5 et 6. Sur ces figures, les axes des abscisses sont identiques et de même échelle.

La courbe relative au capteur **C₁** (figure 5) va permettre de définir pendant la phase de régulation de la remorque quel est l'angle à appliquer à l'essieu 20 de la remorque pour suivre la meilleure trajectoire.

La seconde courbe (figure 6), tracée avec les deux mesures relevées sur l'essieu 20 par le capteur **C₂,** va permettre de corriger le mouvement de cet essieu s'il ne correspond pas à la valeur d'angle désirée.

Ainsi, le système pourra piloter la giration de l'essieu 20, en fonction des deux courbes mémorisées.

Enfin, dans une dernière étape, l'utilisateur peut alors ouvrir l'alimentation hydraulique de l'unité **UH** afin de piloter l'essieu 20. Pour ce faire, il passe le commutateur du boîtier embarqué **UE** dans la position de régulation.

Sur le plan pratique, le présent dispositif permet d'utiliser le convoi dans quatre situations différentes.

Dans une première situation, l'utilisateur coupe l'alimentation hydraulique **UH** et coupe également l'alimentation électrique de l'unité électronique. Les roues de l'essieu de la remorque 2 sont alors en position "suiveur libre". Elles vont donc suivre librement le mouvement du tracteur, y compris dans les courbes.

Dans une deuxième situation, l'utilisateur alimente l'unité hydraulique de la remorque et coupe l'alimentation de l'unité électronique. L'essieu 20 est alors en position "bloquée", ce qui signifie que les roues sont bloquées en position droite et qu'elles ne peuvent pas tourner sur elles-mêmes. Cet état peut être mis en oeuvre par exemple lorsque le convoi se déplace sur une route, à vitesse élevée.

Il peut être prévu que l'unité électronique, si elle détecte une erreur, par exemple due à l'arrachement d'un câble, commande l'essieu 20 en position "bloquée".

Une troisième situation correspond à une coupure de l'alimentation hydraulique et à l'alimentation de l'unité électronique. Ceci correspond à la phase d'apprentissage du système, telle qu'elle vient d'être décrite plus haut.

Enfin, une quatrième situation correspond à l'alimentation du circuit et à l'alimentation de l'unité électronique. Il s'agit de la réelle phase d'utilisation du système. L'utilisateur peut alors démarrer s'il souhaite conserver les paramètres d'utilisation précédemment enregistrés.

Bien entendu, lorsque la remorque sera associée à un autre tracteur, il suffira que son utilisateur mette à nouveau en oeuvre la procédure d'apprentissage pour que le convoi soit complètement opérationnel.

De préférence, la commande hydraulique se fait par des distributeurs hydrauliques proportionnels, qui ont l'avantage d'être souples et précis.

Par ailleurs, le maniement du vérin 5 est géré en appliquant un coefficient qui tient compte des variations de section de sa tige, de manière à ce qu'il ne présente aucune différence de réactivité, quelle que soit le sens de déplacement de ladite tige.

## Revendications

1. Procédé de commande des roues directrices (200, 220) d'une remorque reliée (2) par une articulation (13) à un véhicule tracteur (1) comportant :
- au moins un moyen de raccordement hydraulique de la remorque (2) à un circuit hydraulique sous pression du véhicule tracteur,
- un mécanisme de direction agissant sur les roues directrices de la remorque par au moins un vérin hydraulique, via une unité de commande (UH) hydraulique reliée au moyen de raccordement ;
- une unité électronique (UE) pour commander ladite unité de commande hydraulique (UH) en fonction de signaux fournis par des capteurs (C₁, C₂) ;
- au moins un capteur d'angle (C₁) fournissant à ladite unité électronique (UE) une valeur de signal représentative de l'angle formé par les axes longitudinaux (12, 23) respectifs du véhicule tracteur (1) et de la remorque (2) ;
- un capteur de contrôle (C₂) délivrant à l'unité électronique (UE) une valeur de signal représentative de la position des roues directrices (200, 220) de la remorque (2) ;
**caractérisé par le fait qu'**il consiste à mettre en oeuvre les étapes suivantes :
a) dans un premier mode dit - mode d'apprentissage - dans lequel l'alimentation hydraulique de la remorque (2) est coupée :
- mesurer et enregistrer les signaux fournis par les dits capteurs (C₁, C₂), d'une part lorsque les véhicule (1) et remorque (2) sont alignés et, d'autre part, lorsque le véhicule (1) est en position de braquage maximal par rapport à la remorque (2) ;
- à partir de ces signaux, établir pour chaque capteur, la relation valeur du signal = f (angle) ;
b) puis dans un deuxième mode dit - mode de régulation - dans lequel l'alimentation hydraulique de la remorque (2) est rétablie :
- comparer régulièrement les valeurs des signaux fournis par lesdits capteurs (C₁, C₂) et, dans l'éventualité où elles sont différentes, assigner au capteur de contrôle C₂) la même valeur que celle du capteur d'angle (C₁) pour corriger cet angle en tenant compte de ladite relation et commander l'unité de commande hydraulique (UH) en vue de modifier l'orientation des roues directrices (200, 220) de la remorque (2).

2. Procédé selon la revendication 1, **caractérisé par le fait que** l'on utilise une unité de commande hydraulique (UH) comportant des distributeurs hydrauliques proportionnels.

3. Dispositif de commande de roues directrices (200, 220) d'une remorque reliée (2) par une articulation (13) à un véhicule tracteur (1), pour la mise en oeuvre du procédé selon la revendication 1 ou 2, ce dispositif comportant :
- au moins un moyen de raccordement hydraulique de la remorque (2) à un circuit hydraulique sous pression du véhicule tracteur,
- un mécanisme de direction agissant sur les roues directrices de la remorque par au moins un vérin hydraulique, via une unité de commande (UH) hydraulique reliée au moyen de raccordement ;
- une unité électronique (UE) pour commander ladite unité de commande hydraulique en fonction de signaux fournis par des capteurs (C₁, C₂) ;
- au moins un capteur d'angle (C₁) fournissant à ladite unité électronique (UE) une valeur de signal représentative de l'angle formé par les axes longitudinaux (12, 23) respectifs du véhicule tracteur (1) et de la remorque (2) ;
- un capteur de contrôle (C₂) délivrant à l'unité électronique (UE) une valeur de signal représentative de la position des roues directrices (200, 220) de la remorque (2),
**caractérisé par** le fait ladite unité électronique (UE) intègre des moyens :
a) dans un premier mode dit - mode d'apprentissage - dans lequel l'alimentation hydraulique de la remorque (2) est coupée :
- de mesure et enregistrement des signaux fournis par les dits capteurs (C₁, C₂) d'une part lorsque les véhicule (1) et remorque (2) sont alignés et, d'autre part, lorsque le véhicule (4) est en position de braquage maximal par rapport à la remorque (2) ;
- d'établissement, à partir de ces signaux et pour chaque capteur, la relation valeur du signal = f (angle) ;
b) dans un deuxième mode dit - mode de régulation - dans lequel l'alimentation hydraulique de la remorque (2) est rétablie :
- de comparaison régulière des valeurs des signaux fournis par lesdits capteurs (C₁, C₂) et, dans l'éventualité où elles sont différentes, assigner au capteur de contrôle (C₂) la même valeur que celle du capteur d'angle (C₁) pour corriger cet angle en tenant compte de ladite relation et commander l'unité de commande hydraulique en vue de modifier l'orientation des roues directrices (200, 220) de la remorque (2).

4. Dispositif selon la revendication 3, **caractérisé par le fait que** lesdits capteurs (C₁, C₂) sont des potentiomètres à effet Hall.

5. Dispositif selon la revendication 3 ou 4, **caractérisé par le fait que** ledit capteur d'angle (C₁) est fixé sur un timon (24) solidaire de la remorque (2), d'articulation sur le véhicule tracteur (1) et est relié, par une liaison articulée (3) à parallélogramme déformable, audit véhicule.

6. Dispositif selon l'une des revendications 3 à 5, **caractérisé par le fait que** ledit capteur de contrôle (C₂) est monté dans le pivot de l'essieu (20) des roues (200, 220) directrices de la remorque (2).

7. Dispositif selon l'une des revendications 3 à 6, **caractérisé par le fait qu'**il comprend un boîtier (BE) porté par ledit véhicule tracteur (1), à disposition de son conducteur, et relié à ladite unité électronique (UE), ce boîtier (BE) comportant des moyens de commutation du mode d'apprentissage au mode de régulation et inversement, ainsi que des moyens de validation des mesures des signaux lus dans ledit état d'apprentissage.

8. Dispositif selon l'une des revendications 3 à 7, **caractérisé par le fait que** ladite unité de commande hydraulique (UH) comporte des distributeurs hydrauliques proportionnels.

9. Dispositif selon l'une des revendications 3 à 8, **caractérisé par le fait que** ladite unité électronique (UE) intègre des moyens aptes, en cas de détection d'une erreur, à commander l'orientation des roues directrices (200,220) bloquées en position droite, c'est-à-dire parallèles à l'axe longitudinal (23) de la remorque (2).

## Claims

1. Method of controlling the steerable wheels (200, 220) of a trailer (2) connected by an articulation (13) to a tractor vehicle (1) comprising:
- at least one means for the hydraulic connection of the trailer (2) to a pressurized hydraulic circuit of the tractor vehicle,
- a steering mechanism acting on the steerable wheels of the trailer by means of at least one hydraulic cylinder, via a hydraulic control unit (UH) connected to the connecting means;
- an electronic unit (UE) for controlling the said hydraulic control unit (UH) as a function of signals provided by sensors (C₁, C₂) ;
- at least one angle sensor (C₁) providing the said electronic unit (UE) with a signal value representative of the angle formed by the respective longitudinal axes (12, 23) of the tractor vehicle (1) and the trailer (2);
- a control sensor (C₂) delivering to the electronic unit (UE) a signal value representative of the position of the steerable wheels (200, 220) of the trailer (2);
**characterized in that** it consists in carrying out the following steps:
a) in a first mode, termed learning mode, in which the hydraulic supply of the trailer (2) is cut:
- measuring and recording the signals provided by the said sensors (C₁, C₂), on the one hand when the vehicle (1) and trailer (2) are aligned, and on the other hand when the vehicle (1) is in a maximum deflection position with respect to the trailer (2);
- from these signals, establishing for each sensor the relationship value of the signal = f (angle);
b) then in a second mode, termed regulating mode, in which the hydraulic supply of the trailer (2) is re-established:
- regularly comparing the values of the signals provided by the said sensors (C₁, C₂) and, in the event that they are different, assigning to the control sensor (C₂) the same value as the value of the angle sensor (C₁) in order to correct this angle by taking account of the said relationship and controlling the hydraulic control unit (UH) so as to modify the orientation of the steerable wheels (200, 220) of the trailer (2).

2. Method according to Claim 1, **characterized in that** a hydraulic control unit (UH) comprising proportional hydraulic distributors is used.

3. Device for controlling the steerable wheels (200, 220) of a trailer (2) connected by an articulation (13) to a tractor vehicle (1), for implementing the method according to Claim 1 or 2, this device comprising:
- at least one means for the hydraulic connection of the trailer (2) to a pressurized hydraulic circuit of the tractor vehicle,
- a steering mechanism acting on the steerable wheels of the trailer by means of at least one hydraulic cylinder, via a hydraulic control unit (UH) connected to the connecting means;
- an electronic unit (UE) for controlling the said hydraulic control unit as a function of signals provided by sensors (C₁, C₂) ;
- at least one angle sensor (C₁) providing the said electronic unit (UE) with a signal value representative of the angle formed by the respective longitudinal axes (12, 23) of the tractor vehicle (1) and the trailer (2);
- a control sensor (C₂) delivering to the electronic unit (UE) a signal value representative of the position of the steerable wheels (200, 220) of the trailer (2) ;
**characterized in that** the said electronic unit (UE) incorporates means:
a) in a first mode, termed learning mode, in which the hydraulic supply of the trailer (2) is cut:
- for measuring and recording signals provided by the said sensors (C₁, C₂) , on the one hand when the vehicle (1) and trailer (2) are aligned, and on the other hand when the vehicle (4) is in a maximum deflection position with respect to the trailer (2);
- for establishing, from these signals and for each sensor, the relationship value of the signal = f (angle);
b) in a second mode, termed regulating mode, in which the hydraulic supply of the trailer (2) is reestablished:
- for regularly comparing the values of the signals provided by the said sensors (C₁, C₂) and, in the event that they are different, assigning to the control sensor (C₂) the same value as the value of the angle sensor (C₁) in order to correct this angle by taking account of the said relationship and controlling the hydraulic control unit so as to modify the orientation of the the steerable wheels (200, 220) of the trailer (2).

4. Device according to Claim 3, **characterized in that** the said sensors (C₁, C₂) are Hall-effect potentiometers.

5. Device according to Claim 3 or 4, **characterized in that** the said angle sensor (C₁) is fastened to a drawbar (24) secured to the trailer (2) for articulation on the tractor vehicle (1) and is connected to the said vehicle by an articulated connection (3) of the deformable parallelogram type.

6. Device according to one of Claims 3 to 5, **characterized in that** the said control sensor (C₂) is mounted in the pivot of the axle (20) of the steerable wheels (200, 220) of the trailer (2).

7. Device according to one of Claims 3 to 6, **characterized in that** it comprises a box (BE) carried by the said tractor vehicle (1), available to its driver and connected to the said electronic unit (UE), this box (BE) comprising means for switching from the learning mode to the regulating mode and vice versa, and also means for validating the measurements of the signals read in the said learning state.

8. Device according to one of Claims 3 to 7, **characterized in that** the said hydraulic control unit (UH) comprises proportional hydraulic distributors.

9. Device according to one of Claims 3 to 8, **characterized in that** the said electronic unit (UE) incorporates means which, in the event of detecting an error, are able to control the orientation of the steerable wheels (200, 220) blocked in a straight position, that is to say parallel to the longitudinal axis (23) of the trailer (2).

## Patentansprüche

1. Verfahren zum Steuern der Leiträder (200, 220) eines Anhängers (2), der durch ein Gelenk (13) mit einem Zugfahrzeug (1) verbunden ist, welches umfasst:
- wenigstens ein Mittel zum hydraulischen Anschließen des Anhängers (2) an einen unter Druck stehenden Hydraulikkreis des Zugfahrzeugs,
- einen Lenkmechanismus, der die Leiträder des Anhängers durch wenigstens ein Hydraulikventil über eine Hydrauliksteuereinheit (UH) beeinflusst, die mit dem Anschlussmittel verbunden ist;
- eine Elektronikeinheit (UE) zum Steuern der Hydrauliksteuereinheit (UH) in Abhängigkeit von von Sensoren (C₁, C₂) bereitgestellten Signalen;
- wenigstens einen Winkelsensor (C₁), der der Elektronikeinheit (UE) einen Signalwert bereitstellt, der den von der jeweiligen Längsachse (12, 23) des Zugfahrzeugs (1) und des Anhängers (2) gebildeten Winkel angibt;
- einen Kontrollsensor (C₂), der der Elektronikeinheit (UE) einen Signalwert liefert, der die Position der Leiträder (200, 220) des Anhängers (2) angibt;
**dadurch gekennzeichnet, dass** es darin besteht, die folgenden Schritte umzusetzen:
a) in einem ersten Modus, genannt - Lernmodus -, in dem die Hydraulikversorgung des Anhängers (2) unterbrochen ist:
- Messen und Speichern der von den Sensoren (C₁, C₂) bereitgestellten Signale einerseits, wenn das Fahrzeug (1) und Anhänger (2) in einer Linie ausgerichtet sind und andererseits, wenn das Fahrzeug (1) in maximaler Lenkeinschlagposition bezüglich des Anhängers (2) ist;
- aus diesen Signalen, Ermitteln für jeden Sensor des Relationswerts des Signals = f (Winkel);
b) dann in einem zweiten Modus, genannt - Regulierungsmodus -, in dem die Hydraulikversorgung des Anhängers (2) wiederhergestellt ist:
- regelmäßiges Vergleichen der Werte der von den Sensoren (C₁, C₂) bereitgestellten Signale und im Fall, in dem sie verschieden sind, Zuweisen desselben Werts wie der des Winkelsensors (C₁) dem Kontrollsensor (C₂), um diesen Winkel unter Berücksichtigung der Relation zu korrigieren und Steuern der Hydrauliksteuereinheit (UH) im Hinblick darauf, die Ausrichtung der Leiträder (200, 220) des Anhängers (2) zu verändern.

2. Verfahren gemäß Anspruch 1, **dadurch gekennzeichnet, dass** eine Hydrauliksteuereinheit (UH) verwendet wird, die proportionale Hydraulikverteiler umfasst.

3. Vorrichtung zum Steuern der Leiträder (200, 220) eines Anhängers, der durch ein Gelenk (13) mit einem Zugfahrzeug (1) verbunden ist, für die Umsetzung des Verfahrens gemäß Anspruch 1 oder 2, wobei diese Vorrichtung umfasst:
- wenigstens ein Mittel zum hydraulischen Anschließen des Anhängers (2) an einen unter Druck stehenden Hydraulikkreis des Zugfahrzeugs,
- einen Lenkmechanismus, der die Leiträder des Anhängers durch wenigstens ein Hydraulikventil über eine Hydrauliksteuereinheit (UH) beeinflusst, die mit dem Verbindungsmittel verbunden ist;
- eine Elektronikeinheit (UE) zum Steuern der Hydrauliksteuereinheit in Abhängigkeit von von Sensoren (C₁, C₂) bereitgestellten Signalen;
- wenigstens einen Winkelsensor (C₁), der der Elektronikeinheit (UE) einen Signalwert bereitstellt, der den von der jeweiligen Längsachse (12, 23) des Zugfahrzeugs (1) und des Anhängers (2) gebildeten Winkel angibt;
- einen Kontrollsensor (C₂), der der Elektronikeinheit (UE) einen Signalwert liefert, der die Position der Leiträder (200, 220) des Anhängers (2) angibt,
**dadurch gekennzeichnet, dass** die Elektronikeinheit (UE) Mittel einbezieht:
a) in einem ersten Modus, genannt - Lernmodus -, in dem die Hydraulikversorgung des Anhängers (2) unterbrochen ist:
- zum Messen und Speichern der von den Sensoren (C₁, C₂) bereitgestellten Signale einerseits, wenn das Fahrzeug (1) und Anhänger (2) in einer Linie ausgerichtet sind und andererseits, wenn das Fahrzeug (4) in maximaler Lenkeinschlagposition bezüglich des Anhängers (2) ist;
- zum Ermitteln aus diesen Signalen und für jeden Sensor des Relationswerts des Signals = f (Winkel);
b) in einem zweiten Modus, genannt - Regulierungsmodus -, in dem die Hydraulikversorgung des Anhängers (2) wiederhergestellt ist:
- zum regelmäßigen Vergleichen der Werte der Signale, die von den Sensoren (C₁, C₂) bereitgestellt werden, und im Fall, in dem sie verschieden sind, Zuweisen desselben Werts wie der des Winkelsensors (C₁) dem Kontrollsensor (C₂) zum Korrigieren dieses Winkels unter Berücksichtigung der Relation und Steuern der Hydrauliksteuereinheit im Hinblick darauf, die Ausrichtung der Leiträder (200, 220) des Anhängers (2) zu verändern.

4. Vorrichtung gemäß Anspruch 3, **dadurch gekennzeichnet, dass** die Sensoren (C₁, C₂) Halleffektpotentiometer sind.

5. Vorrichtung gemäß Anspruch 3 oder 4, **dadurch gekennzeichnet, dass** der Winkelsensor (C₁) auf einer fest mit dem Anhänger (2) verbundenen Deichsel (24) zur Gelenkverbindung mit dem Zugfahrzeug (1) befestigt ist und über eine deformierbare Parallelogrammgelenkverbindung (3) mit dem Fahrzeug verbunden ist,

6. Vorrichtung gemäß einem der Ansprüche 3 bis 5, **dadurch gekennzeichnet, dass** der Kontrollsensor (C₂) im Drehzapfen der Radachse (20) der Leiträder (200, 220) des Anhängers (2) montiert ist.

7. Vorrichtung gemäß einem der Ansprüche 3 bis 6, **dadurch gekennzeichnet, dass** sie ein Gehäuse (BE) umfasst, das von dem Zugfahrzeug (1) getragen wird, das seinem Fahrer zur Verfügung steht, und das mit der Elektronikeinheit (UE) verbunden ist, wobei dieses Gehäuse (BE) Mittel zum Umschalten vom Lernmodus in den Regulierungsmodus und umgekehrt umfasst, sowie Mittel zur Bestätigung der Messungen der im Lernzustand gelesenen Signale.

8. Vorrichtung gemäß einem der Ansprüche 3 bis 7, **dadurch gekennzeichnet, dass** die Hydrauliksteuervorrichtung (UH) proportionale Hydraulikverteiler umfasst.

9. Vorrichtung gemäß einem der Ansprüche 3 bis 8, **dadurch gekennzeichnet, dass** die Elektronikeinheit (UE) Mittel einbezieht, die geeignet sind im Fall der Detektierung eines Fehlers, die Ausrichtung der blockierten Leiträder (200, 220) in gerade Position, das heißt parallel zur Längsachse (23) des Anhängers (2), zu steuern.
